# FASCICULE DE BREVET EUROPEEN

(11) **EP 4 232 325 B1**
(45) Date de publication et mention de la délivrance du brevet: **19.03.2025**
(21) Numéro de dépôt: 21783243.5
(22) Date de dépôt: 24.09.2021
(51) Int. Cl.: B60S 1/48, B60S 1/50, B60S 1/56

(54) **SYSTEME DE NETTOYAGE DE VEHICULE AUTOMOBILE**
REINIGUNGSSYSTEM FÜR EIN KRAFTFAHRZEUG
CLEANING SYSTEM FOR A MOTOR VEHICLE

(30) Priorité: 20.10.2020 FR 2010771
(43) Date de publication de la demande: 30.08.2023
(73) Titulaire: Valeo Systèmes d'Essuyage, 78322 Le Mesnil Saint Denis (FR)
(72) Inventeur: BAUDOUIN, Maxime, 78322 LE MESNIL SAINT DENIS (FR); GRASSO, Giuseppe, 78322 LE MESNIL SAINT DENIS (FR); THEBAULT, Denis, 78322 LE MESNIL SAINT DENIS (FR); DOLLE, Yoann, 78322 LE MESNIL SAINT DENIS (FR); PERET, Adrien, 78322 LE MESNIL SAINT DENIS (FR)
(74) Mandataire: Valeo Visibility
(86) Numéro de dépôt international: PCT/EP2021/076394
(87) Numéro de publication internationale: WO 2022/083971

(56) Documents cités:
- EP-A1- 3 640 099
- EP-A1- 3 640 100
- DE-A1- 10 342 715
- DE-A1- 102018 114 891
- DE-A1- 102018 205 999
- DE-C1- 3 616 737
- FR-A1- 2 813 259
- FR-A1- 2 830 290
- FR-A1- 2 898 565
- GB-A- 2 253 338
- US-A1- 2019 161 035
- US-A1- 2020 189 530

## Description

L'invention concerne les systèmes de nettoyage d'une surface de véhicule automobile, notamment de capteurs de véhicule automobile, destinés à être embarqués sur un véhicule automobile, plus particulièrement ceux comprenant plusieurs dispositifs de nettoyage.

De nombreux capteurs de véhicules automobiles sont disposés dans des zones dans lesquelles ils sont exposés à différents types de salissures. On peut par exemple citer les différentes caméras d'assistance à la conduite ou encore les capteurs de distance, les capteurs à ultrason, les radars, les lidars ou encore les capteurs de pluie placés sur le véhicule. Ces capteurs sont très nombreux sur les véhicules autonomes qui, par définition, doivent être capables de rouler sans intervention d'un utilisateur.

Or, ces salissures peuvent conduire à un dysfonctionnement de ces capteurs. Il est donc nécessaire de prévoir plusieurs dispositifs de nettoyage de ces derniers (disséminés partout sur le véhicule) pour en assurer le bon fonctionnement au cours du temps, par exemple un dispositif de nettoyage placé à l'avant du véhicule et un autre placé à l'arrière du véhicule. Il est également possible qu'un givrage formé sur un capteur conduise à un dysfonctionnement de ce dernier.

Classiquement, de tels dispositifs de nettoyage sont composés d'un réservoir dans lequel du liquide de nettoyage est stocké et d'un circuit de distribution fluidique composé de différentes canalisations ou tuyaux permettant d'acheminer le liquide de nettoyage vers au moins une buse de nettoyage placée devant un capteur de manière à projeter du liquide de nettoyage sur ce dernier (il y a en règle générale plusieurs buses de nettoyage pour plusieurs capteurs).

Le document EP 3 640 100 A1 présente un dispositif de nettoyage tel que connu dans l'art antérieur.

Une pompe destinée à projeter du liquide de nettoyage dans le circuit de distribution fluidique jusqu'à la buse de nettoyage est généralement montée directement sur le réservoir. Plus précisément, un tube d'admission de liquide de la pompe est monté en force dans une ouverture ménagée dans le réservoir (un joint permet de garantir l'étanchéité de l'ensemble), l'orifice de sortie de liquide est quant à lui connecté au circuit de distribution fluidique.

Lorsque qu'un dysfonctionnement d'un capteur dû à la présence de salissures est détecté (de manière automatique par exemple), la pompe prélève du liquide de nettoyage dans le réservoir, le liquide étant à une pression similaire à la pression atmosphérique (la pression dépend de la hauteur de liquide de nettoyage dans le réservoir), et le propulse dans le circuit de distribution fluidique à une pression plus élevée (la différence de pression étant dépendante du dimensionnement de la pompe). Le liquide de nettoyage pressurisé est projeté par la buse de nettoyage sur le capteur.

Ainsi, les différents dispositifs de nettoyage permettent de nettoyer l'ensemble des capteurs présents sur le véhicule afin que ces derniers fonctionnent de manière optimale.

Il est par exemple possible qu'un véhicule comprenne deux dispositifs de nettoyage tels que décrits auparavant, l'un placé à l'avant et l'autre à 'arrière du véhicule. Chaque dispositif comprend un réservoir de liquide de nettoyage et au moins une buse de nettoyage, les deux étant reliés par un circuit de distribution fluidique. Chaque dispositif de nettoyage comprend sa propre pompe permettant l'acheminement de liquide de nettoyage pressurisé vers la ou les buses de nettoyage. Ces dispositifs de nettoyage fonctionnent indépendamment l'un de l'autre en nettoyant respectivement des surfaces à l'avant et à l'arrière du véhicule.

Un tel système présente cependant un inconvénient, notamment en cas de dysfonctionnement.

En effet, et dans le cas d'un véhicule comprenant, comme décrit ci-dessus, deux (voire plus de deux) systèmes de nettoyage, un des dispositifs de nettoyage embarqué sur le véhicule peut ne plus fonctionner à cause d'une défaillance de la pompe destinée à projeter du liquide de nettoyage dans le circuit de distribution fluidique. Aucun liquide ne peut dès lors être prélevé dans le réservoir pour être acheminé vers la ou les buses de nettoyage alimenté par la pompe défaillante. Le fonctionnement des capteurs placés dans une certaine zone du véhicule (par exemple à l'avant ou à l'arrière de ce dernier) peut dès lors être altéré, ce qui peut devenir critique, notamment en ce qui concerne les véhicules autonomes pour lesquels le bon fonctionnement des capteurs est un enjeu majeur.

L'invention a notamment pour but de fournir un système de nettoyage de surfaces de véhicule automobile destiné à être embarqué sur un véhicule automobile comprenant des moyens permettant un fonctionnement, même dégradé, d'un dispositif de nettoyage présentant une avarie au niveau de la pompe destinée à alimenter la ou les buses de nettoyage.

A cet effet, l'invention a pour objet un système de nettoyage destiné à être embarqué sur un véhicule automobile et comprenant au moins un premier et un deuxième dispositifs de nettoyage, chaque dispositif de nettoyage comprenant un réservoir de liquide de nettoyage, au moins une buse de nettoyage pour projeter le liquide de nettoyage, un circuit de distribution fluidique agencé pour acheminer du liquide de nettoyage du réservoir vers la buse de nettoyage et une pompe agencée pour injecter le liquide de nettoyage contenu dans le réservoir dans le circuit de distribution fluidique, le système de nettoyage comprenant en outre un dispositif de dérivation reliant au moins deux dispositifs de nettoyage au niveau de leurs circuits de distribution fluidique respectifs, comprenant une conduite de secours et une électrovanne placée sur la conduite de secours pilotée en fonction de l'état de défaillance d'une pompe, et agencé pour alimenter la buse de nettoyage d'un dispositif de nettoyage par le réservoir d'un autre dispositif de nettoyage, chaque dispositif de nettoyage comprenant entre son réservoir et un point de raccordement au dispositif de dérivation un organe anti-retour.

Ainsi, il est possible de palier à une avarie d'un dispositif de nettoyage en l'alimentant avec le liquide de nettoyage d'un autre dispositif de nettoyage.

Lorsque tous les dispositifs de nettoyage fonctionnent, l'électrovanne du dispositif de dérivation est fermée et la communication fluidique entre les dispositifs de nettoyage est impossible.

Cependant, lorsque la pompe d'un dispositif de nettoyage n'est plus capable d'envoyer du liquide de nettoyage jusqu'au buse de nettoyage, cette avarie est détectée (par exemple par autodiagnostic). Dès lors, l'électrovanne du dispositif de dérivation s'ouvre et la pompe fonctionnelle d'un autre dispositif de nettoyage est activée pour alimenter la ou les buses de nettoyage du dispositif de nettoyage inopérant. Ainsi, il est possible d'assurer un fonctionnement, même dégradé, de ce dernier. La présence d'organes anti-retour permet de s'assurer que le liquide de nettoyage injecté via le dispositif de dérivation est bien dirigé vers les buses de nettoyage du dispositif de nettoyage inopérant.

Suivant d'autres caractéristiques optionnelles du système de nettoyage prises seules ou en combinaison :
- le premier dispositif de nettoyage est par exemple placé à l'avant du véhicule automobile et le second dispositif de nettoyage est par exemple placé à l'arrière du véhicule automobile. Ainsi, le véhicule automobile comprend différents dispositifs de nettoyage répartis au plus près des zones à nettoyer ;
- le dispositif de dérivation peut comprendre une pompe bidirectionnelle placée sur la conduite de secours. Ainsi, cette pompe permet d'éviter des pertes de charge lors du passage de liquide de nettoyage dans la conduite de secours pour alimenter un dispositif de nettoyage défaillant et ce quel que soit le dispositif de nettoyage défaillant ;
- l'organe anti-retour peut comprendre un clapet anti-retour. On obtient dès lors un assemblage simple ;
- l'organe anti-retour peut comprendre une électrovanne, de préférence présente au niveau de la pompe agencée pour injecter le liquide de nettoyage contenu dans le réservoir dans le circuit de distribution fluidique. L'avantage de cette solution réside dans le fait que l'électrovanne peut être fermée pour jouer le rôle d'organe anti-retour mais également être ouverte, par exemple pour remplir un réservoir vide d'un dispositif de nettoyage avec du liquide de nettoyage provenant du réservoir d'un autre dispositif de nettoyage ;
- le système de nettoyage peut comprendre plus de deux dispositifs de nettoyage, le circuit de distribution fluidique d'un dispositif de nettoyage pouvant être relié à au moins un circuit de distribution fluidique d'autres dispositifs de nettoyage par l'intermédiaire d'un dispositif de dérivation. Ainsi, il est possible de créer des paires de dispositifs de nettoyage, chaque dispositif de nettoyage pouvant compenser une défaillance de l'autre, ou de relier tous les dispositifs de nettoyage embarqués sur un véhicule automobile ;
- chaque dispositif de nettoyage peut comprendre un distributeur de liquide connectant un tuyau primaire provenant de la pompe à une série de tuyaux secondaires provenant de plusieurs buses de nettoyage et une unité de pilotage configurée pour fermer le distributeur de liquide d'un dispositif de nettoyage en fonction de l'état de défaillance de la pompe d'un autre dispositif de nettoyage. Ainsi, et en cas de défaillance du premier dispositif de nettoyage, le distributeur du second dispositif de nettoyage, notamment des électrovannes présentes dans ce distributeur, peut être fermé pour s'assurer que tout le liquide de nettoyage prélevé dans le réservoir du second dispositif de nettoyage est bien envoyé dans le circuit de distribution fluidique du premier dispositif de nettoyage et jusqu'aux buses de nettoyage de ce dernier ;
- le système de nettoyage peut comprendre un circuit de surveillance d'un état de fonctionnement des premier et deuxième dispositifs de nettoyage et une unité de pilotage connectée au circuit de surveillance et configurée pour ouvrir l'électrovanne du dispositif de dérivation. Ainsi, on obtient une détection automatique d'une défaillance d'un dispositif de nettoyage et la mise en service du dispositif de dérivation en réponse à ce diagnostic ;
- le circuit de surveillance peut être configuré pour détecter un état de défaillance de la pompe du premier ou du second dispositif de nettoyage. On vise donc spécifiquement la défaillance des pompes permettant de prélever du liquide de nettoyage dans les réservoirs des dispositifs de nettoyage ;
- le circuit de surveillance peut comprendre un capteur de pression disposé en amont de la pompe et un autre disposé en aval de la pompe et en amont de l'organe anti-retour. On a ici un exemple d'assemblage permettant de constater par exemple une absence de pression en aval de la pompe indiquant une défaillance de cette dernière et donc une défaillance du dispositif de nettoyage ; et
- le circuit de surveillance est notamment configuré pour détecter qu'un niveau de liquide à l'intérieur du réservoir du premier ou du second dispositif de nettoyage est inférieur à une valeur seuil prédéterminée. Ainsi, on peut par exemple envisager un remplissage de ce réservoir par un autre réservoir afin de permettre au dispositif de nettoyage de continuer à fonctionner. Si l'architecture du système de nettoyage ne permet pas un tel remplissage, alors la détection d'un niveau de liquide de nettoyage insuffisant permet à un autre dispositif de nettoyage d'alimenter les buses de nettoyage par l'intermédiaire de la conduite de secours.

L'invention a également pour objet un procédé de nettoyage de capteurs de véhicule automobile à l'aide du système de nettoyage selon l'invention comprenant les étapes suivantes :
- détection d'une défaillance du premier dispositif de nettoyage,
- commande d'ouverture de l'électrovanne du dispositif de dérivation, et
- commande de marche de la pompe du second dispositif de nettoyage pour injecter du liquide de nettoyage dans la conduite de secours jusqu'à la buse de nettoyage du premier dispositif de nettoyage.

Ainsi, et comme expliqué plus haut, il est possible de continuer à faire fonctionner un dispositif de nettoyage défaillant, a minima en mode dégradé, en utilisant un autre dispositif de nettoyage pour alimenter le circuit de distribution fluidique et les buses de nettoyage du dispositif de nettoyage défaillant.

Suivant d'autres caractéristiques optionnelles du procédé de nettoyage prises seules ou en combinaison :
- l'étape de commande de marche de la pompe du second dispositif de nettoyage peut être jumelée à une commande de marche d'une pompe bidirectionnelle placée sur la conduite de secours. Ainsi, le fonctionnement de deux pompes en série permet de limiter voire de compenser des pertes de charge dues à la circulation du liquide de nettoyage depuis le réservoir du second dispositif de nettoyage vers les buses de nettoyage du premier dispositif de nettoyage ;
- le procédé peut comprendre une étape de fermeture d'un distributeur de liquide du second dispositif de nettoyage connectant un tuyau primaire provenant de la pompe du second dispositif de nettoyage à une série de tuyaux secondaires provenant de plusieurs buses de nettoyage du second dispositif de nettoyage après la détection d'une défaillance du premier dispositif de nettoyage. Ainsi, et en cas de défaillance du premier dispositif de nettoyage, le distributeur du second dispositif de nettoyage, notamment des électrovannes présentes dans ce distributeur, peut être fermé pour s'assurer que tout le liquide de nettoyage prélevé dans le réservoir du second dispositif de nettoyage est bien envoyé dans le circuit de distribution fluidique du premier dispositif de nettoyage et jusqu'aux buses de nettoyage de ce dernier ;
- la défaillance du premier dispositif de nettoyage peut être détectée par un circuit de surveillance d'un état de fonctionnement des premier et second dispositifs de nettoyage, la commande d'ouverture de l'électrovanne du dispositif de dérivation étant contrôlée par une unité de pilotage. Ainsi, on obtient une détection automatique d'une défaillance d'un dispositif de nettoyage et la mise en service du dispositif de dérivation en réponse à ce diagnostic ;

- le circuit de surveillance peut détecter une défaillance de la pompe du premier dispositif de nettoyage. On vise donc spécifiquement la défaillance des pompes permettant de prélever du liquide de nettoyage dans les réservoirs des dispositifs de nettoyage ; et
- la défaillance de la pompe du premier dispositif de nettoyage peut être détectée par des mesures de pression réalisées par un capteur de pression disposé en amont de la pompe et un autre disposé en aval de la pompe et en amont de l'organe anti-retour. On a ici un exemple d'assemblage permettant de constater par exemple une absence de pression en aval de la pompe indiquant une défaillance de cette dernière et donc une défaillance du dispositif de nettoyage.

### Brève description des figures

L'invention sera mieux comprise à la lecture de la description qui va suivre donnée uniquement à titre d'exemple et faite en se référant aux dessins annexés dans lesquels :
La figure 1 est une représentation schématique du système de nettoyage selon l'invention comprenant un premier et un second dispositifs de nettoyage en état de fonctionnement ;
La figure 2 est une représentation schématique du système de nettoyage de la figure 1, le premier dispositif de nettoyage étant défaillant ;
La figure 3 est une représentation schématique du système de nettoyage de la figure 1 illustrant un remplissage d'un réservoir du premier dispositif de nettoyage par le second dispositif de nettoyage ;
La figure 4 est une représentation schématique d'un système de nettoyage selon une variante de l'invention, le premier dispositif de nettoyage étant défaillant ;
La figure 5 est une représentation schématique des différentes étapes du procédé de nettoyage selon l'invention en cas de défaillance d'un dispositif de nettoyage ; et
La figure 6 est une représentation schématique des différentes étapes du procédé de nettoyage en cas de remplissage du réservoir d'un dispositif de nettoyage par un autre dispositif de nettoyage.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Par « amont » ou « aval », on situe les éléments / équipements dans le sens de transport du flux de matière à traiter. Ainsi, un premier équipement ou élément, par exemple une pompe, est situé en amont d'un deuxième équipement ou élément si la matière est d'abord traitée par le premier puis le second équipement.

### Description détaillée

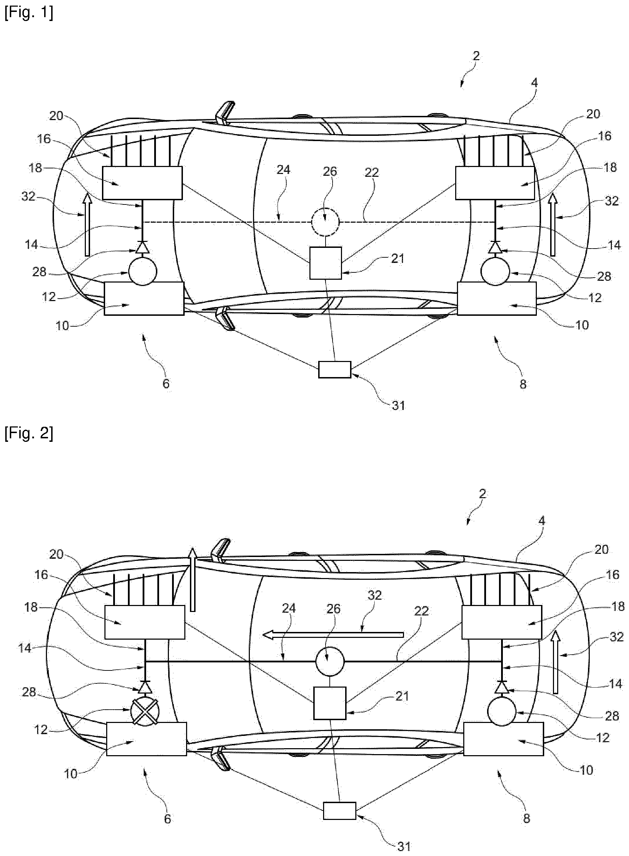

On se réfère désormais à la figure 1 représentant un système de nettoyage 2 embarqué sur un véhicule automobile 4. Ce système de nettoyage 2 a pour objectif de permettre le nettoyage de différentes surfaces du véhicule automobile 4 comme par exemple des capteurs embarqués sur le véhicule ou encore le pare-brise ou la lunette arrière. Les figures comprennent des flèches 32 illustrant le sens de circulation du liquide de nettoyage en fonction de l'état de fonctionnement du système de nettoyage 2.

Le système de nettoyage comprend, dans l'exemple illustré, un premier dispositif de nettoyage 6 placé à l'avant du véhicule et un second dispositif de nettoyage 8 placé à l'arrière du véhicule.

Chaque dispositif de nettoyage comprend un réservoir 10 de liquide de nettoyage sur lequel est monté une pompe 12. La pompe 12 est montée dans un renfoncement du réservoir 10 destiné à accueillir la pompe 12, le réservoir 10 comprenant un orifice au travers duquel un tube d'admission de la pompe 12 est monté, avec un joint à l'interface entre le réservoir 10 et la pompe 12 au niveau de l'orifice pour assurer l'étanchéité de l'ensemble. La pompe 12 est de manière classique une pompe standard comprenant par exemple un corps principal de forme tubulaire. Ce corps principal peut être composé d'une première partie de pompage et d'une seconde partie d'entraînement comprenant un moteur électrique. La première partie de pompage comprend un tube d'admission de liquide et un tube de refoulement de liquide afin de pouvoir recevoir du liquide de nettoyage du réservoir 10 et de le refouler à une pression supérieure à la pression en entrée de pompe 12. Le tube d'admission de liquide peut être placé à une extrémité libre de la première partie de pompage et être coaxial avec le corps principal de la pompe 12 en partageant avec ce dernier le même axe de révolution. La seconde partie de refoulement peut s'étendre à partir de la première partie de pompage dans une direction perpendiculaire à l'axe de révolution du corps principal.

La seconde partie d'entraînement peut être située au-dessus de la première partie de pompage et comprendre un moteur électrique et, à son extrémité libre, un connecteur permettant de connecter la pompe 12 à une source d'alimentation électrique.

Plusieurs buses de nettoyage (non représentées sur les figures) sont situées à l'autre extrémité des dispositifs de nettoyage 6 et 8 et destinées à être placée devant une surface du véhicule automobile à nettoyer afin d'y projeter du liquide de nettoyage pressurisé.

Chaque dispositif de nettoyage comprend en outre des tuyaux (ou canalisations) reliant les différents organes (pompe 12, buse de nettoyage, etc.) entre eux pour former un circuit de distribution fluidique 14.

Chaque dispositif de nettoyage peut comprendre, dans le cas où un même réservoir 10 alimente plusieurs buses de nettoyage, un distributeur de liquide 16 permettant de connecter un tuyau primaire 18 provenant de la pompe 12 à une série de tuyaux secondaires 20 provenant de plusieurs buses de nettoyage, comme cela est illustré sur les figures. De manière classique, ce dernier peut comprendre une ou plusieurs électrovannes pour permettre ou non l'alimentation des tuyaux secondaires 20. On peut envisager la présence d'une électrovanne au niveau du tuyau primaire en entré de distributeur de liquide 16 pour piloter l'alimentation de tous les tuyaux secondaires 20 ou des électrovannes sur chaque tuyau secondaire 20 pour un pilotage spécifique de l'alimentation de chaque buse de nettoyage. Tout type d'électrovanne peut être utilisée, par exemple une électrovanne à solénoïde, normalement ouverte ou fermée.

Le système de nettoyage peut également comprendre une unité de pilotage 21 permettant de contrôler l'ouverture et la fermeture du distributeur de liquide, par exemple des électrovannes, afin par exemple de couper l'alimentation des buses de nettoyage d'un dispositif de nettoyage opérationnel pour s'assurer que le liquide de nettoyage de ce dernier soit bien redirigé vers un dispositif de nettoyage défaillant.

Le système de nettoyage 2 comprend en outre un dispositif de dérivation 22 reliant les deux dispositifs de nettoyage 6 et 8 au niveau de leurs circuits de distribution fluidique 14 respectifs.

Le dispositif de dérivation 22 comprend une conduite de secours 24 reliant le circuit de distribution fluidique 14 du premier dispositif de nettoyage 6 au circuit de distribution fluidique 14 du second dispositif de nettoyage 8, de préférence entre la pompe 12 et le distributeur de liquide 16 de chaque dispositif de nettoyage. On crée ainsi une communication fluidique entre les deux dispositifs de nettoyage permettant d'alimenter l'un avec le liquide de nettoyage stocké dans le réservoir 10 de l'autre.

Le dispositif de dérivation 22 comprend également une électrovanne 26 placée sur la conduite de secours 24 et pilotée en fonction de l'état de défaillance d'une pompe. En d'autres termes :
- l'électrovanne 26 est fermée lorsque les deux dispositifs de nettoyage sont opérationnels afin d'éviter une communication fluidique entre eux, comme cela est visible sur la figure 1, mais
- l'électrovanne 26 est ouverte lorsque l'un des deux dispositifs de nettoyage est défaillant et ce afin de permettre au dispositif de nettoyage opérationnel de faire fonctionner l'autre, a minima en mode dégradé, comme cela est visible sur les figures 2, 3 et 4.

Tout type d'électrovanne peut être utilisée, par exemple une électrovanne à solénoïde, de préférence normalement fermée.

Dans le cas où le nombre de dispositifs de nettoyage est supérieur à deux, il est possible de faire en sorte que chaque dispositif de nettoyage soit relié à un autre dispositif de nettoyage voire plus, en envisageant même une connexion de tous les dispositifs de nettoyage entre eux par l'intermédiaire de dispositifs de dérivation 22.

Chaque dispositif de nettoyage comprend entre son réservoir 10 et un point de raccordement au dispositif de dérivation un organe anti-retour 28

Selon une première variante montrée sur les figures 1 à 3, l'organe anti-retour 28 comprend un clapet anti-retour ne permettant que le passage de liquide provenant de la pompe 12 du dispositif de nettoyage concerné. Il s'agit d'une manière simple d'empêcher le liquide de nettoyage provenant d'un dispositif de nettoyage fonctionnel d'être reversé dans le réservoir 10 d'un dispositif de nettoyage défaillant.

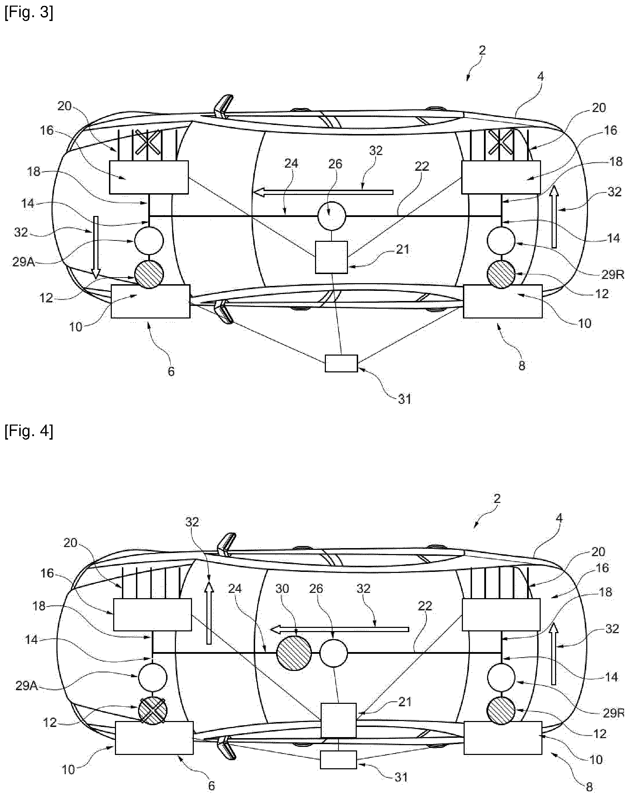

Selon une seconde variante illustrée à la figure 4 mais également sur la figure 3, l'organe anti-retour 28 comprend une électrovanne 29, 29A pour le dispositif de nettoyage avant et 29R pour le dispositif de nettoyage arrière, présente au niveau de la pompe agencée pour injecter le liquide contenu dans le réservoir 10 dans le circuit de distribution fluidique (cas non illustré sur les figures). L'avantage de cette variante réside dans le fait d'avoir un système dynamique. En d'autres termes :
- lors du fonctionnement du dispositif de nettoyage, l'électrovanne 29 est ouverte pour permettre le passage de liquide de nettoyage provenant du réservoir 10 et l'électrovanne 26 est fermée,
- lorsque le dispositif de nettoyage est défaillant, notamment une défaillance de pompe, l'électrovanne 29 est fermée pour empêcher le liquide de nettoyage provenant d'un dispositif de nettoyage fonctionnel d'être reversé dans le réservoir 10 d'un dispositif de nettoyage défaillant et l'électrovanne 26 est ouverte, et
- s'il est nécessaire de remplir le réservoir 10 de liquide de nettoyage d'un dispositif de nettoyage, mais la pompe 12 est fonctionnelle, l'électrovanne 29 est ouverte pour permettre au liquide de nettoyage provenant d'un autre dispositif de nettoyage d'atteindre le réservoir 10. L'unité de pilotage 21 du distributeur de liquide peut fermer ce dernier afin d'éviter une sortie de liquide de nettoyage par les buses de nettoyage du dispositif de nettoyage dont on souhaite remplir le réservoir 10. Le distributeur de liquide 16 du dispositif de nettoyage auquel du liquide est prélevé est également fermé pour les mêmes raisons.

Considérant cette possibilité de remplissage du réservoir 10 illustré à la figure 3 pour le premier réservoir, il est possible que le système de nettoyage 2 comprenne un circuit de surveillance 31 configurée pour détecter qu'un niveau de liquide à l'intérieur du réservoir 10 du premier ou du second dispositif de nettoyage est inférieur à une valeur de seuil prédéterminée, par exemple en comprenant une sonde mesurant le niveau de liquide à l'intérieur d'un réservoir 10. Il pourrait dès lors y avoir, après détection d'un niveau de liquide insuffisant, remplissage du réservoir 10 avec du liquide de nettoyage provenant d'un autre dispositif de nettoyage avec activation de la pompe 12 de ce dernier, ouverture de l'électrovanne 26 du dispositif de dérivation 22 et ouverture de l'électrovanne 29A formant organe anti-retour. Comme illustré à la figure 3, la ou les vannes des distributeurs de liquide 16 des deux dispositifs de nettoyage sont fermées pour éviter toute sortie de liquide de nettoyage par les buses de nettoyage alors que cela n'est pas désiré.

Dans le cas où l'organe anti-retour 28 comprend un clapet anti-retour, un niveau de liquide insuffisant peut dès lors être assimilé à une défaillance conduisant à l'alimentation des buses de nettoyage par un autre dispositif de nettoyage.

Dans la variante illustrée à la figure 4, le dispositif de dérivation comprend en outre une pompe bidirectionnelle 30 placée sur la conduite de secours. Comme expliqué auparavant, cela permet de pallier aux pertes de charge dues à la circulation du liquide de nettoyage depuis le réservoir 10 d'un dispositif de nettoyage opérationnel vers les buses de nettoyage d'un dispositif de nettoyage défaillant et ce quel que soit le dispositif de nettoyage défaillant. Il serait même possible, en fonction du dimensionnement de la pompe bidirectionnelle 30, de faire en sorte que la pression en sortie de buse soit supérieure à celle en sortie de pompe 12 du dispositif de nettoyage opérationnel. L'absence de pompe bidirectionnelle 30 permet néanmoins d'assurer un fonctionnement au moins dégradé du dispositif de nettoyage défaillant.

Comme expliqué auparavant, le système de nettoyage peut comprendre un circuit de surveillance 31 pour mesurer le niveau de remplissage des réservoirs 10 des premier et second dispositifs de nettoyage 6 et 8. Ce circuit de surveillance 31 peut bien évidemment être utilisé pour surveiller l'état de fonctionnement des premier et second dispositifs de nettoyage et donc détecter une défaillance d'un dispositif de nettoyage.

Par exemple, le circuit de surveillance 31 peut être configuré pour détecter spécifiquement un état de défaillance de la pompe 12 du premier ou du second dispositif de nettoyage 6 et 8. Il est possible que le circuit de surveillance 31 comprenne un capteur de pression disposé en amont de la pompe 12 et un autre disposé en aval de la pompe 12 et en amont de l'organe anti-retour 28. La constatation d'une absence d'élévation de pression en aval de la pompe 12 conduit à la constatation d'une défaillance du dispositif de nettoyage.

Le circuit de surveillance 31 peut être connecté à l'unité de pilotage 21. Dès lors, la constatation d'une défaillance par le circuit de surveillance 31 est communiquée à l'unité de pilotage 21 qui ouvre l'électrovanne 26 et peut également mettre en marche la pompe d'un dispositif de nettoyage opérationnel relié au dispositif de nettoyage défaillant.

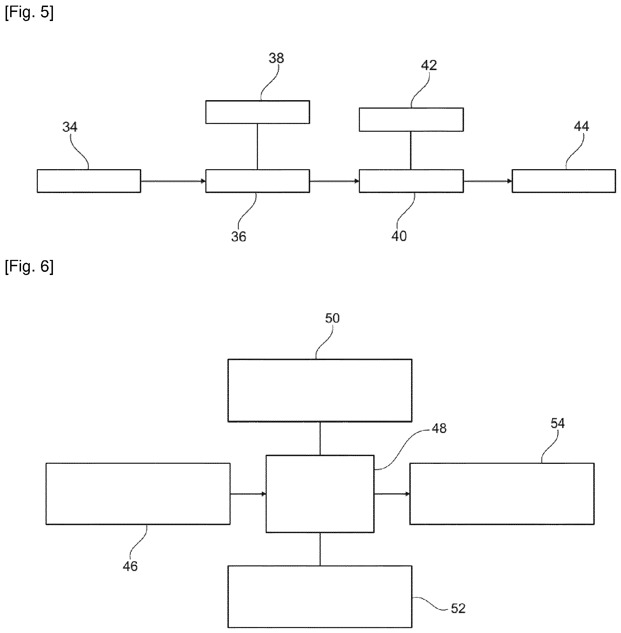

On va décrire un mode de fonctionnement du système de nettoyage tel que décrit ci-dessus à l'appui de la figure 2 et de la figure 4 (variante comprenant une électrovanne 26 sur la conduite de secours 24 et des électrovannes formant organes anti-retour 28) en cas de défaillance du premier dispositif de nettoyage 6. Le mode de fonctionnement est le même pour une défaillance du second dispositif de nettoyage 8. La figure 5 illustre les différentes étapes de ce mode de fonctionnement.

La première étape 34 consiste en la détection d'une défaillance par exemple du premier dispositif de nettoyage 6. Cette dernière peut être détectée notamment par le circuit de surveillance 31. Il peut s'agir d'une détection comme décrite plus haut, avec des capteurs présents en amont et en aval de la pompe 12 ou une sonde mesurant le niveau de liquide à l'intérieur du réservoir 10. A ce stade, une anomalie conduisant à une défaillance du premier dispositif de nettoyage 6 a été diagnostiquée.

La seconde étape 36 est la commande d'ouverture de l'électrovanne 26 du dispositif de dérivation 22, par exemple par l'unité de pilotage 21 couplée au circuit de surveillance. Cette commande d'ouverture est fonction du type d'électrovanne utilisé. On peut également envisager une étape 38 de fermeture du distributeur de liquide 16 du second dispositif de remplissage 8 à ce moment mais également de l'électrovanne 29 formant organe anti-retour 28 du premier dispositif de nettoyage 6. A ce stade, le dispositif de dérivation 22 peut acheminer du liquide du second dispositif de nettoyage 8 vers le premier dispositif de nettoyage 6. Si le distributeur de liquide 16 du second dispositif de nettoyage 8 a été fermé tout comme la possible électrovanne 29 formant organe-anti-retour 28 au niveau du premier dispositif de nettoyage 6, alors tout est prêt pour l'injection de liquide depuis le second dispositif de nettoyage 8 vers le premier dispositif de nettoyage 6. L'étape 36 et l'étape optionnelle 38 permettent donc de préparer la redirection du liquide de nettoyage.

La troisième étape 40 est la commande de marche de la pompe 12 du ou d'un des seconds dispositifs de nettoyage 8 pour injecter du liquide de nettoyage dans la conduite de secours 24 jusqu'aux buses de nettoyage du premier dispositif de nettoyage 6. Si une pompe bidirectionnelle 30 est présente sur la conduite de secours 24 comme cela est illustré sur la figure 4, alors cette dernière est de préférence activée de manière synchronisée avec la pompe 12 du second dispositif de nettoyage 8 (étape 42 du procédé). Le distributeur de liquide 16 du second dispositif de nettoyage 8 ainsi que l'électrovanne 29 formant organe-anti-retour 28 au niveau du premier dispositif de nettoyage 6 peuvent être fermés lors de cette étape. Ainsi, du liquide de nettoyage est prélevé dans le réservoir 10 du second dispositif de nettoyage 8 et injecté jusqu'aux buses de nettoyage du premier dispositif de nettoyage 6 par le biais de la conduite de secours 24 du dispositif de dérivation 22.

Suite à cette série d'étapes 34, 36 et 40 et lorsque le fonctionnement du premier dispositif de nettoyage n'est plus nécessaire, par exemple après une opération de réparation ou de maintenance, l'électrovanne 26 peut être commutée de retour à l'état fermé, la pompe bidirectionnelle 30 peut être désactivée tout comme la pompe 12 du second dispositif de nettoyage 8 et l'ensemble des organes ayant été fermés sont réouverts afin d'assurer un retour au *statu quo ante* (étape 44 de retour à la situation initiale).

Dans le cas où l'on souhaite remplir le réservoir 10 du premier dispositif de nettoyage 6 avec du liquide de nettoyage provenant du réservoir 10 du second dispositif de nettoyage 8 (illustré à la figure 6), les étapes suivantes sont respectées :
- étape 46 de détection d'un niveau de liquide de nettoyage inférieur à une valeur seuil prédéterminée dans le réservoir 10 du premier dispositif de nettoyage 6, par exemple par une sonde du circuit de surveillance,
- étape 48 de commande d'ouverture de l'électrovanne 26 et potentielle fermeture des distributeurs de liquide 16 du premier et du second dispositif de nettoyage 6 et 8 (étape 50), l'électrovanne formant organe anti-retour 28 au niveau du premier dispositif de nettoyage 6 étant ouverte (de manière passive ou active en fonction du type d'électrovanne, étape 52),
- étape 54 de commande de marche de la pompe 12 d'un second dispositif de nettoyage 8 pour injecter du liquide de nettoyage dans la conduite de secours 24 jusqu'au réservoir 10 du premier dispositif de nettoyage 6.

### Liste de références

2 : système de nettoyage
4 : véhicule automobile
6 : premier dispositif de nettoyage
8 : second dispositif de nettoyage
10 : réservoirs
12 : pompes
14 : circuits de distribution fluidique
16 : distributeurs de liquide
18 : tuyau primaire
20 : tuyaux secondaires
21 : unité de pilotage
22 : dispositif de dérivation
24 : conduite de secours
26 : électrovanne du dispositif de dérivation
28 : organe anti-retour
29, 29A, 29R : électrovannes formant organe anti-retour
30 : pompe bidirectionnelle
31 : circuit de surveillance
32 : direction du liquide de nettoyage
34 : détection de défaillance du premier dispositif de nettoyage
36, 48 : commande d'ouverture de l'électrovanne du dispositif de dérivation
38 : fermeture du distributeur de liquide du second dispositif et de l'électrovanne formant organe anti-retour du premier dispositif
40, 54 : commande de marche de la pompe du second dispositif
42 : activation de la pompe bidirectionnelle
44 : retour à la situation initiale
46 : détection du niveau de liquide de nettoyage inférieur à une valeur seuil
50 : fermeture des distributeurs de liquide du premier et du second dispositifs
52 : Ouverture de l'électrovanne formant organe anti-retour du premier dispositif

## Revendications

1. Système de nettoyage (2) destiné à être embarqué sur un véhicule automobile (4) et comprenant au moins un premier et un deuxième dispositifs de nettoyage (6, 8), chaque dispositif de nettoyage (6, 8) comprenant un réservoir (10) de liquide de nettoyage, au moins une buse de nettoyage pour projeter le liquide de nettoyage, un circuit de distribution fluidique (14) agencé pour acheminer du liquide de nettoyage du réservoir (10) vers la buse de nettoyage et une pompe (12) agencée pour injecter le liquide de nettoyage contenu dans le réservoir (10) dans le circuit de distribution fluidique (14),
**caractérisé en ce que** le système de nettoyage (2) comprend en outre un dispositif de dérivation (22) reliant au moins deux dispositifs de nettoyage (6, 8) au niveau de leurs circuits de distribution fluidique (14) respectifs, comprenant une conduite de secours (24) et une électrovanne (26) placée sur la conduite de secours (24) pilotée en fonction de l'état de défaillance d'une pompe (12), et agencé pour alimenter la buse de nettoyage d'un dispositif de nettoyage (6, 8) par le réservoir (10) d'un autre dispositif de nettoyage (6, 8),
chaque dispositif de nettoyage (6, 8) comprenant entre son réservoir (10) et un point de raccordement au dispositif de dérivation (22) un organe anti-retour (28).

2. Système de nettoyage (2) selon la revendication 1, dans lequel le premier dispositif de nettoyage (6) est placé à l'avant du véhicule automobile (4) et le second dispositif de nettoyage (8) est placé à l'arrière du véhicule automobile (4).

3. Système de nettoyage (2) selon l'une quelconque des revendications précédentes, dans lequel le dispositif de dérivation (22) comprend une pompe bidirectionnelle (30) placée sur la conduite de secours (24).

4. Système de nettoyage (2) selon l'une quelconque des revendications précédentes, dans lequel l'organe anti-retour (28) comprend un clapet anti-retour.

5. Système de nettoyage (2) selon l'une quelconque des revendications précédentes, dans lequel l'organe anti-retour (28) comprend une électrovanne, de préférence présente au niveau de la pompe (12) agencée pour injecter le liquide de nettoyage contenu dans le réservoir (10) dans le circuit de distribution fluidique (14).

6. Système de nettoyage (2) selon l'une quelconque des revendications précédentes, comprenant plus de deux dispositifs de nettoyage (6, 8), le circuit de distribution fluidique (14) d'un dispositif de nettoyage (6, 8) étant relié à au moins un circuit de distribution fluidique (14) d'autres dispositifs de nettoyage (6, 8) par l'intermédiaire d'un dispositif de dérivation (22).

7. Système de nettoyage (2) selon l'une quelconque des revendications précédentes, dans lequel chaque dispositif de nettoyage (6, 8) comprend un distributeur de liquide (16) connectant un tuyau primaire (18) provenant de la pompe (12) à une série de tuyaux secondaires (20) provenant de plusieurs buses de nettoyage et une unité de pilotage (21) configurée pour fermer le distributeur de liquide (16) d'un dispositif de nettoyage en fonction de l'état de défaillance de la pompe (12) d'un autre dispositif de nettoyage.

8. Système de nettoyage (2) selon l'une des quelconque des revendications précédentes comprenant un circuit de surveillance d'un état de fonctionnement des premier et deuxième dispositifs de nettoyage (6, 8) et une unité de pilotage (21) connectée au circuit de surveillance et configurée pour ouvrir l'électrovanne (26) du dispositif de dérivation (22).

9. Système de nettoyage (2) selon la revendication 8, dans lequel le circuit de surveillance est configuré pour détecter un état de défaillance de la pompe (12) du premier ou du second dispositif de nettoyage (6,8).

10. Système de nettoyage (2) selon la revendication 9, dans lequel le circuit de surveillance comprend un capteur de pression disposé en amont de la pompe (12) et un autre disposé en aval de la pompe (12) et en amont de l'organe anti-retour (28).

11. Système de nettoyage selon l'une quelconque des revendications 8 à 10, dans lequel le circuit de surveillance est configurée pour détecter qu'un niveau de liquide à l'intérieur du réservoir (10) du premier ou du second dispositif de nettoyage (6, 8) est inférieur à une valeur seuil prédéterminée.

12. Procédé de nettoyage de capteurs de véhicule automobile à l'aide du système de nettoyage (2) selon l'une quelconque des revendications précédentes comprenant les étapes suivantes :
- détection d'une défaillance du premier dispositif de nettoyage (6),
- commande d'ouverture de l'électrovanne (26) du dispositif de dérivation (22), et
- commande de marche de la pompe (12) du second dispositif de nettoyage (8) pour injecter du liquide de nettoyage dans la conduite de secours (24) jusqu'à la buse de nettoyage du premier dispositif de nettoyage (6).

13. Procédé de nettoyage selon la revendication 12, dans lequel l'étape de commande de marche de la pompe (12) du second dispositif de nettoyage (8) est jumelée à une commande de marche d'une pompe bidirectionnelle (30) placée sur la conduite de secours (24).

14. Procédé de nettoyage selon l'une quelconque des revendications 12 et 13, le procédé comprenant une étape de fermeture d'un distributeur de liquide (16) du second dispositif de nettoyage connectant un tuyau primaire (18) provenant de la pompe (12) du second dispositif de nettoyage (8) à une série de tuyaux secondaires (20) provenant de plusieurs buses de nettoyage du second dispositif de nettoyage (8) après la détection d'une défaillance du premier dispositif de nettoyage (6).

15. Procédé de nettoyage selon l'une quelconque des revendications 12 à 14, dans lequel la défaillance du premier dispositif de nettoyage (6) est détectée par un circuit de surveillance d'un état de fonctionnement des premier et second dispositifs de nettoyage (6, 8), la commande d'ouverture de l'électrovanne (26) du dispositif de dérivation (22) étant contrôlée par une unité de pilotage (21).

## Patentansprüche

1. Reinigungssystem (2), das dazu bestimmt ist, in ein Kraftfahrzeug (4) integriert zu sein, und mindestens eine erste und eine zweite Reinigungsvorrichtung (6, 8) beinhaltet, wobei jede Reinigungsvorrichtung (6, 8) einen Behälter (10) für Reinigungsflüssigkeit, mindestens eine Reinigungsdüse zum Verspritzen der Reinigungsflüssigkeit, einen Fluidverteilungskreislauf (14), der dazu eingerichtet ist, Reinigungsflüssigkeit von dem Behälter (10) zu der Reinigungsdüse zu leiten, und eine Pumpe (12), die dazu eingerichtet ist, die in dem Behälter enthaltene Reinigungsflüssigkeit (10) in den Fluidverteilungskreislauf (14) einzuspeisen, beinhaltet, **dadurch gekennzeichnet, dass** das Reinigungssystem (2) ferner eine Umleitungsvorrichtung (22) beinhaltet, die mindestens zwei Reinigungsvorrichtungen (6, 8) im Bereich ihrer jeweiligen Fluidverteilungskreisläufe (14) verbindet, eine Hilfsleitung (24) und ein in der Hilfsleitung (24) angeordnetes Magnetventil (26), das in Abhängigkeit von dem Fehlerzustand einer Pumpe (12) gesteuert wird, beinhaltet und dazu angeordnet ist, die Reinigungsdüse einer Reinigungsvorrichtung (6, 8) durch den Behälter (10) einer anderen Reinigungsvorrichtung (6, 8) zu versorgen,
wobei jede Reinigungsvorrichtung (6, 8) zwischen ihrem Behälter (10) und einem Anschlusspunkt an die Umleitungsvorrichtung (22) einen Rückflussverhinderer (28) beinhaltet.

2. Reinigungssystem (2) nach Anspruch 1, wobei die erste Reinigungsvorrichtung (6) vorne im Kraftfahrzeug (4) angeordnet ist und die zweite Reinigungsvorrichtung (8) hinten im Kraftfahrzeug (4) angeordnet ist.

3. Reinigungssystem (2) nach einem der vorhergehenden Ansprüche, wobei die Umleitungsvorrichtung (22) eine bidirektionale Pumpe (30) beinhaltet, die in der Hilfsleitung (24) angeordnet ist.

4. Reinigungssystem (2) nach einem der vorhergehenden Ansprüche, wobei der Rückflussverhinderer (28) ein Rückschlagventil beinhaltet.

5. Reinigungssystem (2) nach einem der vorhergehenden Ansprüche, wobei der Rückflussverhinderer (28) ein Magnetventil beinhaltet, das sich vorzugsweise im Bereich der Pumpe (12) befindet, die dazu angepasst ist, die in dem Behälter (10) enthaltene Reinigungsflüssigkeit in den Fluidverteilungskreislauf (14) einzuspeisen.

6. Reinigungssystem (2) nach einem der vorhergehenden Ansprüche, das mehr als zwei Reinigungsvorrichtungen (6, 8) beinhaltet, wobei der Fluidverteilungskreislauf (14) einer Reinigungsvorrichtung (6, 8) mittels einer Umleitungsvorrichtung (22) mit mindestens einem Fluidverteilungskreislauf (14) anderer Reinigungsvorrichtungen (6, 8) verbunden ist.

7. Reinigungssystem (2) nach einem der vorhergehenden Ansprüche, wobei jede Reinigungsvorrichtung (6, 8) einen Flüssigkeitsverteiler (16), der ein Hauptrohr (18), das von der Pumpe (12) kommt, mit einer Reihe von sekundären Rohren (20), die von mehreren Reinigungsdüsen kommen, verbindet, und eine Steuereinheit (21), die dazu konfiguriert ist, den Flüssigkeitsverteiler (16) einer Reinigungsvorrichtung in Abhängigkeit von dem Fehlerzustand der Pumpe (12) einer anderen Reinigungsvorrichtung zu schließen, beinhaltet.

8. Reinigungssystem (2) nach einem der vorhergehenden Ansprüche, das einen Kreislauf zur Überwachung eines Betriebszustands der ersten und der zweiten Reinigungsvorrichtung (6, 8) und eine Steuereinheit (21), die mit dem Überwachungskreislauf verbunden ist und dazu konfiguriert ist, das Magnetventil (26) der Umleitungsvorrichtung (22) zu öffnen, beinhaltet.

9. Reinigungssystem (2) nach Anspruch 8, wobei der Überwachungskreislauf dazu konfiguriert ist, einen Fehlerzustand der Pumpe (12) der ersten oder der zweiten Reinigungsvorrichtung (6, 8) zu detektieren.

10. Reinigungssystem (2) nach Anspruch 9, wobei der Überwachungskreislauf einen Drucksensor, der stromaufwärts der Pumpe (12) angeordnet ist, und einen weiteren, der stromabwärts der Pumpe (12) und stromaufwärts des Rückflussverhinderers (28) angeordnet ist, beinhaltet.

11. Reinigungssystem nach einem der Ansprüche 8 bis 10, wobei der Überwachungskreislauf dazu konfiguriert ist, zu detektieren, dass ein Flüssigkeitspegel in dem Behälter (10) der ersten oder der zweiten Reinigungsvorrichtung (6, 8) niedriger als ein vorbestimmter Schwellenwert ist.

12. Verfahren zur Reinigung von Sensoren eines Kraftfahrzeugs mit Hilfe des Reinigungssystems (2) nach einem der vorhergehenden Ansprüche, beinhaltend die folgenden Schritte:
- Detektieren eines Fehlers der ersten Reinigungsvorrichtung (6),
- Ansteuern des Öffnens des Magnetventils (26) der Umleitungsvorrichtung (22) und
- Ansteuern des Einschaltens der Pumpe (12) der zweiten Reinigungsvorrichtung (8), um Reinigungsflüssigkeit in die Hilfsleitung (24) bis zu der Reinigungsdüse der ersten Reinigungsvorrichtung (6) einzuspeisen.

13. Reinigungsverfahren nach Anspruch 12, wobei der Schritt des Ansteuerns des Einschaltens der Pumpe (12) der zweiten Reinigungsvorrichtung (8) mit einem Ansteuern des Einschaltens einer bidirektionalen Pumpe (30), die in der Hilfsleitung (24) angeordnet ist, einhergeht.

14. Reinigungsverfahren nach einem der Ansprüche 12 und 13, wobei das Verfahren nach dem Detektieren eines Fehlers der ersten Reinigungsvorrichtung (6) einen Schritt des Schließens eines Flüssigkeitsverteilers (16) der zweiten Reinigungsvorrichtung beinhaltet, der ein Hauptrohr (18), das von der Pumpe (12) der zweiten Reinigungsvorrichtung (8) kommt, mit einer Reihe von sekundären Rohren (20), die von mehreren Reinigungsdüsen der zweiten Reinigungsvorrichtung (8) kommen, verbindet.

15. Reinigungsverfahren nach einem der Ansprüche 12 bis 14, wobei der Fehler der ersten Reinigungsvorrichtung (6) durch einen Kreislauf zur Überwachung eines Betriebszustands der ersten und der zweiten Reinigungsvorrichtung (6, 8) detektiert wird, wobei das Ansteuern des Öffnens des Magnetventils (26) der Umleitungsvorrichtung (22) durch eine Steuereinheit (21) gesteuert wird.

## Claims

1. A cleaning system (2) suitable for being mounted on a motor vehicle (4) and comprising at least one first and one second cleaning device (6, 8), wherein each cleaning device (6, 8) comprises a cleaning liquid reservoir (10), at least one cleaning nozzle for spraying the cleaning liquid, a fluid distribution circuit (14) arranged to convey cleaning liquid from the reservoir (10) to the cleaning nozzle and a pump (12) arranged to inject the cleaning liquid contained in the reservoir (10) into the fluid distribution circuit (14),
**characterized in that** the cleaning system (2) further comprises a bypass device (22) connecting at least two cleaning devices (6, 8) by their respective fluid distribution circuits (14), comprising a backup line (24) and a solenoid valve (26) placed on the backup line (24) controlled as a function of the failure state of a pump (12), and arranged to supply the cleaning nozzle of one cleaning device (6, 8) from the reservoir (10) of another cleaning device (6, 8),
wherein each cleaning device (6, 8) comprises a non-return member (28) between its reservoir (10) and a point of connection to the bypass device (22).

2. The cleaning system (2) as claimed in claim 1, wherein the first cleaning device (6) is placed at the front of the motor vehicle (4) and the second cleaning device (8) is placed at the rear of the motor vehicle (4).

3. The cleaning system (2) as claimed in any one of the preceding claims, wherein the bypass device (22) comprises a two-way pump (30) placed on the backup line (24).

4. The cleaning system (2) as claimed in any one of the preceding claims, wherein the non-return member (28) comprises a non-return valve.

5. The cleaning system (2) as claimed in any one of the preceding claims, wherein the non-return member (28) comprises a solenoid valve, preferably present on the pump (12) arranged to inject the cleaning liquid contained in the reservoir (10) into the fluid distribution circuit (14).

6. The cleaning system (2) as claimed in any one of the preceding claims, comprising more than two cleaning devices (6, 8), wherein the fluid distribution circuit (14) of one cleaning device (6, 8) is connected to at least one fluid distribution circuit (14) of other cleaning devices (6, 8) by means of a bypass device (22).

7. The cleaning system (2) as claimed in any one of the preceding claims, wherein each cleaning device (6, 8) comprises a liquid distributor (16) connecting a primary pipe (18) coming from the pump (12) to a series of secondary pipes (20) coming from a plurality of cleaning nozzles, and a control unit (21) configured to close the liquid distributor (16) of one cleaning device as a function of the failure state of the pump (12) of another cleaning device.

8. The cleaning system (2) as claimed in any one of the preceding claims, comprising a circuit for monitoring an operating state of the first and second cleaning devices (6, 8), and a control unit (21) connected to the monitoring circuit and configured to open the solenoid valve (26) of the bypass device (22).

9. The cleaning system (2) as claimed in claim 8, wherein the monitoring circuit is configured to detect a failure state of the pump (12) of the first or second cleaning device (6, 8).

10. The cleaning system (2) as claimed in claim 9, wherein the monitoring circuit comprises one pressure sensor positioned upstream of the pump (12) and another positioned downstream of the pump (12) and upstream of the non-return member (28).

11. The cleaning system as claimed in any one of claims 8 to 10, wherein the monitoring circuit is configured to detect that a liquid level inside the reservoir (10) of the first or second cleaning device (6, 8) is below a predetermined threshold value.

12. A method for cleaning motor vehicle sensors using the cleaning system (2) as claimed in any one of the preceding claims, comprising the following steps:
- detecting the failure of the first cleaning device (6),
- commanding the opening of the solenoid valve (26) of the bypass device (22), and
- commanding the starting of the pump (12) of the second cleaning device (8) in order to inject cleaning liquid in the backup line (24) to the cleaning nozzle of the first cleaning device (6).

13. The cleaning method as claimed in claim 12, wherein the step of commanding the starting of the pump (12) of the second cleaning device (8) is coupled with a command to start a two-way pump (30) placed on the backup line (24).

14. The cleaning method as claimed in any one of claims 12 and 13, the method comprising a step of closing a liquid distributor (16) of the second cleaning device connecting a primary pipe (18) coming from the pump (12) of the second cleaning device (8) to a series of secondary pipes (20) coming from a plurality of cleaning nozzles of the second cleaning device (8) after the failure of the first cleaning device (6) has been detected.

15. The cleaning method as claimed in any one of claims 12 to 14, wherein the failure of the first cleaning device (6) is detected by a circuit for monitoring an operating state of the first and second cleaning devices (6, 8), the command to open the solenoid valve (26) of the bypass device (22) being controlled by a control unit (21).
